# EUROPEAN PATENT APPLICATION

(11) **EP 0 540 794 A1**
(43) Date of publication of application: **12.05.1993**
(21) Application number: 91310335.4
(22) Date of filing: 08.11.1991
(51) Int. Cl.: B01D 29/33, B01D 29/64, B01D 29/90

(54) **Liquid filter assembly**

(71) Applicant: Chen, Tsong-Hae, Hsinten, Taipei Hsien (TW)
(72) Inventor: Chen, Tsong-Hae, Hsinten, Taipei Hsien (TW)
(74) Representative: Laight, Martin Harvey

(57) **Abstract**

In a water filter, a casing (1) contains a filter unit comprising a ceramic core (3) and an active carbon element (15). Water required for drinking passes from an inlet (13) through the filter unit (3,15), to a first outlet (11). Water for washing purposes passes from the inlet (13) to a second outlet (12). Cylindrical brushes (6) are moved against the outer surface of the ceramic core (3) by the effect of water flow on blades (41) which are coupled to the brushes. The blades (41) and brushes (6) are floated by float members (4 and 4'). It is a feature that dirt removed by the brushes (6) is washed out by water used for washing purposes, passing from the inlet to the first outlet (12) without passing through the filter unit (3,15).

## Description

The present invention relates to a liquid filter assembly, in particular, but not exclusively, for filtering water.

Industrial development has brought to people's living some convenience, but it also has brought environment pollution, and particularly the pollution of water sources has become a serious issue. Though our drinking tap water has been subjected to special treatment, because of the serious pollution at water source the treated tap water contains more micro-organisms, sands and dirts, by many fold. Therefore, for the sake of people's health, we wish to have fresh drinking water, so the product of civilization, the "water filter", has come to our way of life. However, the variety of water filters sold on the market is quite wide, and the ordinary water filter has to have its filter element cleansed or replaced regularly. Ordinary people are too busy or simply do not have the basic knowledge of how to cleanse a filter element, so the filter element is often left too long uncleansed, so that much dirt adheres onto the element. Such dirt, besides influencing the water output, could not produce clean water quality, and would be a place to nurture bacteria. Besides, during the cleaning process, often because of an incorrect method or negligence, damage to the filter element is caused and a large amount of expense must be paid for the replacement of the filter.

In view of the above defects and difficulties of conventional use, the inventor has tried to find solutions to achieve the practical purpose of maintaining fresh and clean water quality without the trouble of manually cleansing the filter, and has made intensive study and design for the assembly and productions based on many years of professional experience, knowledge and design results, and has come up with this invention.

According to the present invention there is provided a liquid filter assembly comprising a filter for filtering a liquid, a cleaning element for cleaning a surface of the filter, and drive means for producing relative movement between the cleaning element and the filter to clean the said surface of the filter, the drive means being activated by flow of liquid.

Preferably the assembly includes a housing, an inlet for liquid, a first outlet for liquid to leave the housing without passing through the filter, and a second outlet for liquid to leave the housing after passing through the filter. Preferably the cleaning element is situated in a region through which liquid flows in operation from the inlet to the first outlet without passing through the filter, and preferably the drive means is positioned in such a manner as to be activated by flow of liquid from the inlet to either the first outlet or the second outlet or both outlets.

In accordance with another preferred feature, there may be provided one or more float members coupled to the cleaning element and/or to the drive means for floating at least partially the cleaning element and/or drive means in the liquid.

Conveniently, the drive means includes a rotor having blades adapted to be driven by water flow through the housing.

Other features of the invention will now be set out which may be provided independently of, or in combination with, the features already discussed.

The invention may relate to an automatic filter-cleansing, water cleaner, comprising mainly of casing, washer, filter element, rotator, roller brush, packing and upper cover, etc., with the feature that the force of water flow drives a rotator to rotate, and that dirt adhering onto the outside of the filter element is scraped by roller brushes on the rotator, to achieve automatic cleansing of the filter element to keep the water clean. The filter element is fitted with a bolt assembly with upper and lower floats and bladed rotator, and on the periphery of the upper and lower floats and between the blades are several rotating roller brushes. On the inside of the casing and at corresponding positions of the upper and lower blades of the rotator, are fitted water inlets with particular water spray angle, so that when water is taken for drinking or washing purposes, the force of the water supply drives the blades of the rotator, so that the rotator rotates and the roller brushes scrape off the dirt adhering on the outside of a multi-hole ceramic member, to achieve the purpose of maintaining clean water quality by automatically cleansing the filter element.

This invention may also relate to an automatically cleansing water filter, particularly to one featuring the thrust of water to rotate the rotator with upper and lower floats with adequate floating force and blades, and with several roller brushes on it, to brush off the dirt adhering on the surface of the filter element when the rotator is rotating, so that the dirt is flowed out from the drain without passing through the filter when one is washing his hands, to achieve the effect of automatic cleansing, and to keep the water quality clean. The apparatus may feature mainly a casing, pad, multi-hole ceramic core, rotator, roller brushes, washer and upper cover, etc. The multi-hole ceramic core may include upper and lower floats and blades, and, with the rotator assembled with screw bolts, at appropriate locations on the central edge of the rotator are fitted several rotating roller brushes, so that when water for washing articles is taken, the water will drive the rotator with its thrust to push the blades on the upper and lower parts of the rotator, when the water is flowing at a special angle formed by the rotator blades, and the dirt adhering on the surface of the multi-hole ceramic core is removed by several roller brushes, to achieve excellent and clean water quality by automatically cleansing the filter element, so it is an invention with quite practical value.

The invention may relate to a "FILTER AUTOMATIC CLEANSING WATER CLEANER", comprised, in part, of a casing, washer, filter element, rotater, roller brush, packing, and upper cover. Flowing water generates a force which causes rotation of the rotater. Dirt adhered to the outside of the filter element is scraped off by the roller brushes of the rotater, thereby automatically cleaning the filter element. As a result, the filter is better able to perform its function of cleansing water. The filter element is fitted with a bolt assembly, upper and lower floats, and a bladed rotater. Rotating roller brushes are disposed on the periphery of the upper and lower floats, and between the blades. On the inside of the casing, adjacent the upper and lower blades of the rotater, water inlets having a particular water spray angle are fitted.

When water flows through the apparatus, the force generated by the water pressure drives the blades of the rotater. The rotater rotates, thereby scraping off dirt adhered to the outside of the porous ceramic element. The objective of automatically cleaning the filter element, to maintain clean water quality, is thereby realized.

General industrial development has resulted in certain conveniences, but has also brought with it the problem of environmental pollution. The pollution of water sources has become an important issue.

Although drinking-quality (tap) water is subjected to special treatment, water source pollution has exacerbated the occurrence of microOorganisms, sand, and dirt, in the final treated water. In the interest of improving people's health, a variety of water filters have been proposed, and have appeared on the market. The ordinary filter of this type requires regular cleaning or replacement. However, due to the fact that the average individual lacks either the time or the knowledge necessary to carry out the task of cleaning the filter element, often the filter element is left uncleaned.

The dirt adhered to an unclean filter element provides a region which may harbor bacteria, and creates a restriction to the water flow volume and pressure. Also, if the individual damages the filter element during the manual cleaning operation, an expense for replacing the element may result.

In view of the aforementioned defects, the inventor has addressed the objective of obtaining clean water by filtering, without the necessity of manually cleaning the filter. As a result of intensive studs and design work, based on many years of professional experience, the inventor has created the subject invention.

The invention may relate to "FILTER AUTOMATIC CLEANSING WATER CLEANER", particularly one featuring a thrust of water which rotates the rotater.

Roller brushes disposed on said rotater brush off dirt adhered to the surface of the filter element. The disloged dirt flows away from the filter element, and then away from the apparatus, without passing through the filter.

The results of the invention are automatic filter elements cleaning, and clean water quality.

The invention may comprise, in part, a casing, pad, porous ceramic core, rotater, roller brushes, washer, and upper cover. The porous ceramic core includes an upper and lower float, and blades. The rotater is assembled with screw type bolts. Roller brushes are fitted along the central edge of the rotater.

Water entering the filter device impinges the blades of the rotater, causing rotation of the rotater and roller brushes. Dirt adhered to the surface of the porous ceramic core is removed by the action of the brushes.

The automatic cleaning features of the invention facilitate improved water cleansing capabilities, which is of considerable practical value.

An embodiment of the invention will now be described by way of example with reference to the accompanying drawings, in which:-
Figure 1 is a sectional view of an assembled structure embodying the invention;
Figure 2 is an exploded view of the structure of Figure 1; and

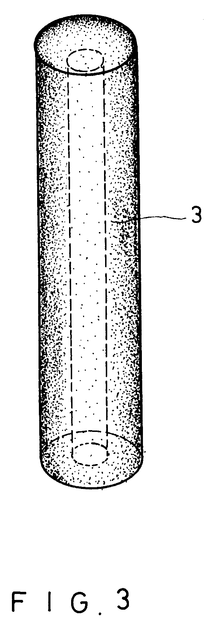

Figure 3 is a perspective view of the whetstone pillar.

In a water filter, a casing 1 contains a filter unit comprising a ceramic core 3 and an active carbon element 15. Water required for drinking passes from an inlet 13 through the filter unit 3, 15, to a first outlet 11. Water for washing purposes passes from the inlet 13 to a second outlet 12. Cylindrical brushes 6 are moved against the outer surface of the ceramic core 3 by the effect of water flow on blades 41 which are coupled to the brushes. The blades 41 and brushes 6 are floated by float members 4 and 4'. It is a feature that dirt removed by the brushes 6 is washed out by water used for washing purposes, passing from the inlet to the first outlet 12 without passing through the filter unit 3, 15.

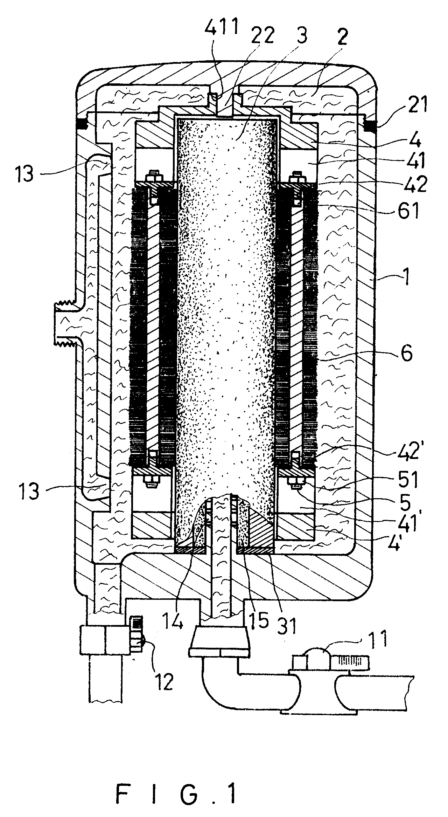

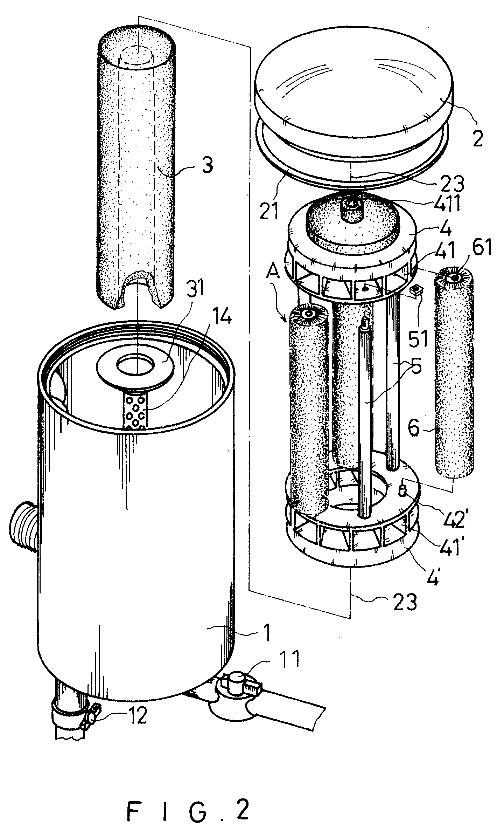

Referring in detail to Figure 1 and Figure 2, the embodiment includes a washer 31 and the multi-hole ceramic core 3 with active carbon 15 at a communicating multi-hole cylinder 14 between the interior centre and a drinking water control valve 11. An upper cover 2 and a washer 21, are twist locked at the top of casing 1, so that the multi-hole ceramic core 3 is fixed at the central position. On the outside of the multi-hole ceramic core 3 are bolts 51 and nuts 5 assembled on upper and lower floats 4, 4', and blades 41, 41' on rotator A. On the corresponding side of upper and lower blades 41, 41' are several projecting posts 42, 42', so that the roller brushes with two ends with axis holes 61 can be mounted thereon and in rotating status. On the upper end of the rotator A is an axis hole 411 to match the central axis 23 at the base centre of upper cover 2. At a position corresponding to the upper and lower blades' 41, 41' in the casing 1 is respectively a particular water spray angle water inlet 13, so that when opening the drinking water control valve 11 or washing water control valve 12, the water inlet 13 produces a thrust of flowing water to drive the blades 41, 41' and cause the rotator A to rotate, with the roller brush 6 thereon, to scrape off the dirt adhering on the surface of the multi-hole ceramic core 3. Thus when turning the washing water control valve 12 for washing hand or articles, the water containing dirt will run directly from the washing water control valve 12 without coming through the multi-hole ceramic core 3, to keep the water quality clean.

Referring to Figure 1 and Figure 2, the invention comprises a washer 31 and a porous ceramic core 3 with active carbon 15 at the communicating perforated tube 14 between the interior center and drinking water control valve 11. The upper cover 2 and washer 21 are twist-locked at the top of casing 1, so that the multi-hole ceramic core 3 is fixed at a central position.

Rotater (A) has upper and lower floats (4) (4') and blades (41) (41'), and a porous ceramic core (3), assembled together with a screw (51) and bolt (5). Projecting posts (42) (42') are disposed on a side of each of the upper and lower blades (41) (41'). Access holes (61) on each end of the roller brushes accommodate the projecting posts, for mounting the roller brushes thereon. An access hole (411), aligned with the central axle (22), is disposed at the upper end of the rotater (A).

A water spray inlet (13) is positioned adjacent the upper and the lower blades (41) (41'), such that flowing water drives the blades (41) (41'), causing rotater (A) to rotate. In this manner, the roller brushes (6) scrape off dirt adhered to the surface of the porous ceramic core (3).

Upon opening the washing water control valve (12), the water containing the dislodged dirt will drain from the washing water control valve, without passing through the porous ceramic core (3). Clean water quality is thereby maintained.

An apparatus for cleansing water including a fluid driven cleaner is disclosed herein. The apparatus includes a hollow casing having an upper open end and a central axis, a perforated tube disposed along said central axis inside the casing, the tube being in flow communication with a drinking water control valve, a porous ceramic core filter element disposed around the tube, a cover for covering said upper open end, the cover including an axle, an upper float disposed above the filter element, the upper float including a hole, the axle being rotatably disposed in the hole in the upper float, a lower float disposed below the filter element, the upper and lower floats including fastening means for maintaining a fixed distance between said floats, and a plurality of roller brushes rotatably fasted between the upper and lower floats for cleaning dirt from the outer surface of the filter element, blade means for rotatably driving the floats disposed in the upper and said lower floats, and inlet means for directing a pressurized flow of water to rotatably drive the blade means, whereby pressurized water impinging the blade means causes rotation of the floats such that the roller brushes scrape filtered dirt from the outside surface of the filter element, resulting in automatic cleansing of the filter element.

## Claims

1. A liquid filter assembly comprising a filter for filtering a liquid, a cleaning element for cleaning a surface of the filter, and drive means for producing relative movement between the cleaning element and the filter to clean the said surface of the filter, the drive means being activated by flow of liquid.

2. An assembly according to Claim 1, including a housing, an inlet for liquid, a first outlet for liquid to leave the housing without passing through the filter, and a second outlet for liquid to leave the housing after passing through the filter.

3. An assembly according to Claim 2, in which the cleaning element is situated in a region through which liquid flows in operation from the inlet to the first outlet without passing through the filter.

4. An assembly according to Claim 2 or 3, in which the drive means is positioned in such a manner as to be activated by flow of liquid from the inlet to either the first outlet or the second outlet or both outlets.

5. An assembly according to any preceding claim in which there are provided one or more float members coupled to the cleaning element and/or to the drive means for floating at least partially the cleaning element and/or drive means in the liquid.

6. An assembly according to any preceding claim in which the drive means includes a rotor having blades adapted to be driven by water flow though the housing.

7. An assembly according any preceding claim in which the cleaning element is a brush.

8. An apparatus for cleansing water, comprising:
a hollow casing having an upper open end and a central axis;
a perforated tube disposed along said central, axis inside said casing, said tube being in flow communication with a drinking water control valve;
a porous ceramic core filter element disposed around said tube;
cover means for covering said upper open end;
said cover means including an axle extending inside said casing along said central axis;
an upper float disposed above said filter element, said upper float including a hole aligned along said central axis , said axle being rotatably disposed in the hole in said upper float;
a lower float disposed below said filter element;
said upper and lower floats including fastening means for maintaining a fixed distance between said floats;
roller brush means for scraping dirt from an outer surface of said filter element disposed between said upper and said lower float, said roller brush means comprising a plurality of roller brushes having longitndinal axes parallel to said central axis of said casing, and having axis holes at each end;
projecting post means disposed on said upper float and said lower float and extending into said access holes for rotatably supporting said roller brush means;
said roller brush means and said upper and lower floats being fastened together by said fastening means to form a unit;
blade means for rotatably driving said unit disposed in said upper and said lower floats;
and inlet means for directing a pressurized flow of water to rotatably drive said blade means;
whereby pressurized water impinging said blade means causes rotation of said unit such that said roller brush means scrape filtered dirt from the outside surface of said filter element, resulting in automatic cleansing of the filter element.

9. An apparatus for cleansing water according to claim 8, wherein said inlet means comprises upper and lower water supply in lets disposed in said casing adjacent respective said blade means, said upper and lower water in lets being disposed at an angle relative to said blade means such that water flowing from said upper and lower supply inlets rotatably drives said blade means.

10. An apparatus for cleansing water according to claim 9 , wherein said roller brush means comprise a plurality of roller pillars made of whetstone.
